# FASCICULE DE BREVET EUROPEEN

(11) **EP 2 400 668 B1**
(45) Date de publication et mention de la délivrance du brevet: **18.07.2012**
(21) Numéro de dépôt: 11171174.3
(22) Date de dépôt: 23.06.2011
(51) Int. Cl.: H04B 3/54

(54) **Ensemble équipement/bloc secteur à transmission de données par courants porteurs en ligne CPL**
Ausrüstungseinheit/Sektorblock mit CPL-Online-Datenübertragung durch Trägerstrom
Device/power adapter assembly with data transmission by powerline communication PLC

(30) Priorité: 23.06.2010 FR 1054994
(43) Date de publication de la demande: 28.12.2011
(73) Titulaire: FREEBOX, 75008 Paris (FR)
(72) Inventeur: Callanquin, François, 75015 PARIS (FR)
(74) Mandataire: Dupuis-Latour, Dominique

(56) Documents cités:
- EP-A1- 1 343 253
- DE-A1- 2 903 860
- US-A- 4 835 517
- US-A1- 2007 121 924

## Description

L'invention concerne les équipements multimédia domestiques mettant en oeuvre une technique de transmission de données numériques par courants porteurs en ligne, technique dite CPL ou PLC (*Power Line Communication*).

Il s'agit d'échanger des données numériques entre plusieurs équipements d'une même habitation via un réseau filaire constitué par les lignes préexistantes d'alimentation secteur (typiquement 230 V - 50 Hz en Europe), en faisant transiter les informations d'un équipement à l'autre par modulation d'une ou plusieurs porteuses dans une bande de fréquences habituellement située dans la plage 2-30 MHz.

Les EP 1 343 253 A1 et US 4 835 517 A sont des exemples d'équipements utilisant ces techniques de transmission de données.

L'interfaçage entre l'équipement et le secteur est assuré par un module CPL associé à chaque équipement.

Pour assurer la communication dans les deux sens *(full duplex),* le module CPL a besoin de récupérer en entrée la porteuse véhiculée sur le réseau domestique, et également d'émettre cette porteuse. Ces signaux sont généralement véhiculés par l'intermédiaire d'un transformateur isolant la partie basse tension comprenant les circuits numériques et les circuits de modulation/démodulation CPL de la partie haute tension, dangereuse, du réseau électrique. La transmission de ces signaux nécessite deux fils.

Le module CPL a également besoin d'une information de synchronisation dite "détection de passage par zéro" ou ZC *(Zero Crossing)* permettant d'assurer un séquencement correct du traitement des données à la fréquence du secteur alternatif (50 Hz). Cette information de synchronisation ("signal ZC") nécessite un, voire deux fils supplémentaires.

Enfin, en sortie, le module CPL utilise un câble de transmission de données numériques, généralement un câble de type Ethernet avec une connectique appropriée, habituellement une prise RJ45 8 fils.

Le module CPL peut également intégrer une alimentation basse tension, typiquement 12 V, pour l'équipement auquel ils sera associé. Dans ce cas, le module est également pourvu en sortie d'un câble d'alimentation terminé par une prise à brancher sur l'équipement à alimenter par le boîtier déporté contenant le module CPL.

Un exemple d'un tel boîtier CPL est le bloc combiné alimentation/module CPL dénommé *Freeplug,* fabriqué par le fournisseur d'accès Internet Free, Paris, France, qui est destiné à alimenter les équipements de type "box" de ce fournisseur d'accès tels que *Freebox* (boîtier ADSL multifonction : télévision, téléphone, routeur Wi-Fi) et *Freebox HD* (boîtier télévision intégrant décodeur, magnétoscope numérique à disque dur, serveur domestique, etc.).

Ces deux boîtiers distincts sont disposés l'un à proximité de la prise téléphonique (pour l'interfaçage ADSL), l'autre à proximité du téléviseur, et ils peuvent communiquer entre eux par courants CPL, ainsi qu'avec d'autres équipements branchés sur le même circuit électrique de l'habitation (ordinateur). L'échange de données par courants CPL est une alternative intéressante aux transmissions sans fil (réseau Wi-Fi), qui ne sont pas toujours possibles en raison des obstacles à la transmission radio, ou qui ne sont pas souhaitées par l'utilisateur.

Concrètement, un bloc combiné alimentation/module CPL se présente sous forme d'un boîtier ("bloc secteur") muni en entrée d'un câble secteur et en sortie d'un double cordon, à savoir un cordon d'alimentation 12 V, doublé par un cordon blindé de type Ethernet 8 fils pour la transmission des données démodulées vers/depuis la "box" distante.

Ce double câblage rend l'installation malcommode dans la mesure où le câble Ethernet, plus épais, est volumineux et moins flexible que le câble d'alimentation basse tension. De plus, le câble Ethernet et sa connectique associée génèrent un surcoût ainsi que des risques de rupture de liaison notamment au niveau des connecteurs RJ45, relativement fragiles.

Enfin, l'intégration dans un même bloc de l'alimentation et du module CPL engendre des contraintes thermiques relativement sévères.

En effet, un module CPL produit un dégagement de chaleur non négligeable (sa puissance consommée est de l'ordre de 3 watts), et il est nécessaire de l'intégrer dans un bloc le plus compact possible, au surplus à proximité d'une alimentation générant par elle-même un dégagement de chaleur relativement important. Il convient donc d'étudier très soigneusement le refroidissement des circuits spécifiques du module CPL pour les préserver des températures excessives risquant de conduire à une défaillance ou, à tout le moins, à un vieillissement accéléré.

Le but de l'invention est de proposer un ensemble dans lequel ces circuits CPL spécifiques sont déportés dans l'équipement distant au lieu d'être intégrés au bloc secteur, de manière à :
- se passer de câble de transmission de données numériques entre le bloc secteur et l'équipement ;
- diminuer la taille du bloc secteur, du fait de l'absence de circuits CPL spécifiques et surtout des contraintes thermiques moindres ;
- assurer un refroidissement efficace des circuits CPL spécifiques en logeant ceux-ci dans l'équipement, où le dégagement de chaleur locale est moindre et le volume disponible est plus important.

Mais pour ce faire, il est nécessaire de transférer à l'équipement :
- la modulation CPL dans le spectre 2-30 MHz,
- le signal de détection de passage par zéro (signal ZC) de la sinusoïde du réseau secteur, et
- la tension continue (12 V) pour l'alimentation de l'équipement connecté. Compte tenu de la puissance délivrée par l'alimentation, le courant d'alimentation atteint généralement plusieurs ampères, ce qui impose pour l'alimentation basse tension une ligne à faible impédance.

La transmission directe du signal ZC, dont la fréquence est basse (50 Hz), n'est pas possible sur une ligne à faible impédance car l'alimentation étant conçue pour fournir une tension de sortie stable, elle s'opposera par nature à toute modification de la tension fournie à l'équipement : le signal ZC à 50 Hz serait en effet interprété comme une ondulation résiduelle, qui serait immédiatement effacée par l'asservissement de tension de l'alimentation.
enfin, l'injection directe du signal CPL (dans le spectre 2-30 MHz) sur la ligne à basse impédance entraînerait une dégradation rapide du signal entre la ligne secteur et l'équipement.

Le simple déport des circuits CPL du bloc secteur vers l'équipement ne permet donc pas d'atteindre à lui seul le but recherché, sauf à intégrer l'ensemble du bloc secteur à l'équipement.

Or on souhaite bien entendu conserver tous les avantages d'un bloc secteur séparé : réduction de la taille de l'équipement et du dégagement de chaleur au sein de cet équipement, modularité, sécurité du fait de l'absence de circuit sous tension secteur dans l'équipement, etc.

Pour résoudre ce problème et atteindre le but recherché, l'invention propose, essentiellement, de leurrer la boucle de contre-réaction assurant la régulation du convertisseur d'alimentation (230 V secteur alternatif vers 12 V continu) en réinjectant, en superposition à la tension de consigne de la boucle de contre-réaction, un signal dérivé de la tension secteur. L'asservissement interprétera ceci comme une consigne de baisse ou de hausse de la tension de sortie (alors qu'en fait celle-ci est stabilisée) et réagira en conséquence, en donnant l'ordre de diminuer la tension de sortie lorsque le signal réinjecté augmente la tension de consigne de la boucle de contre-réaction et *vice versa.* On retrouvera donc en sortie une ondulation sinusoïdale variant (à un déphasage constant près) au même rythme que la fréquence de la ligne secteur, et cette ondulation pourra être ensuite extraite dans l'équipement pour produire le signal ZC nécessaire au séquencement du module CPL pour la modulation/démodulation des signaux numériques.

Plus précisément, l'invention a pour objet un ensemble comprenant les éléments connus, par exemple d'après le EP 1 343 253 A1 précité, indiqués dans le préambule de la revendication 1. Les éléments propres à l'invention sont énoncés dans la partie caractérisante de cette revendication 1, et les sous-revendications visent diverses caractéristiques subsidiaires avantageuses.

L'invention couvre également, pris isolément, le bloc secteur et l'équipement adaptés à un tel ensemble.

On va maintenant décrire un exemple de mise en oeuvre du dispositif de l'invention, en référence aux dessins annexés où les mêmes références numériques désignent d'une figure à l'autre des éléments identiques ou fonctionnellement semblables.
La Figure 1 est une représentation schématique montrant deux ensembles selon l'état de la technique, avec pour chacun un bloc secteur et un équipement reliés ensemble par un double cordon, pour l'alimentation et pour la transmission des données numériques.
La Figure 2 illustre schématiquement un ensemble selon l'invention, avec un unique cordon d'alimentation entre bloc secteur et équipement.
La Figure 3 illustre sous forme de schéma par blocs fonctionnels la structure du bloc secteur et de l'équipement selon l'invention.
La Figure 4 est une vue détaillée de la structure interne du convertisseur à découpage du bloc secteur de la Figure 3.
Les Figures 5a à 5c illustrent trois variantes du circuit additionnel de réinjection de signal du bloc secteur de la Figure 3.
La Figure 6 illustre la structure interne du circuit de synchronisation extracteur d'impulsions de l'équipement de la Figure 3.
La Figure 7 illustre la structure interne des circuits de couplage CPL prévus dans le bloc secteur et dans l'équipement représentés Figure 3.

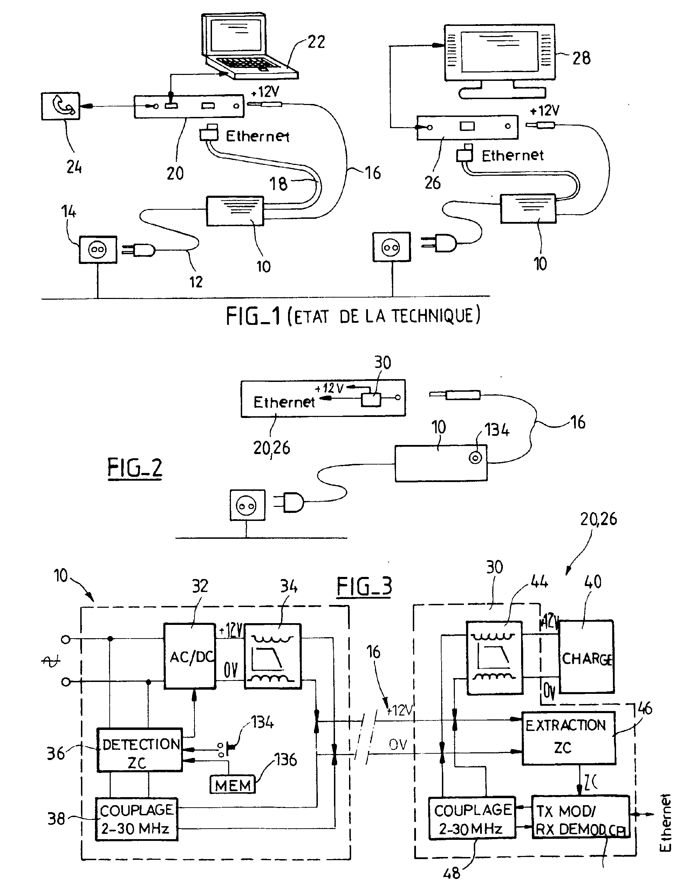

La Figure 1 illustre schématiquement deux ensembles selon l'état de la technique, comportant chacun un bloc secteur et un équipement reliés ensemble, de façon caractéristique, par un double cordon.

Chacun des ensembles est constitué d'un bloc secteur 10 combiné alimentation basse tension/module CPL, relié par un cordon 12 à une prise 14 de la ligne secteur (habituellement 230 V - 50 Hz). En sortie, le bloc secteur 10 est muni d'un cordon 16 servant de conducteur d'alimentation basse tension (généralement +12 V) et d'un câble de données numériques 18, par exemple un câble Ethernet, ces deux cordons 16, 18 étant reliés à un équipement 20 ou 26.

L'équipement 20 est par exemple un boîtier ADSL multifonctions relié à un ordinateur 22 et à une prise téléphonique 24 (pour l'interfaçage ADSL), et l'équipement 26 est un boîtier TV relié à un téléviseur 28. Grâce aux modules CPL intégrés aux blocs secteur 10, il est possible d'échanger des données entre l'équipement 20 placé à proximité de la prise téléphonique 24 et l'équipement 26 placé à proximité du téléviseur 28.

Bien entendu, d'autres types d'équipements peuvent être utilisés, ou à d'autres fins, par exemple pour constituer un réseau domestique entre plusieurs ordinateurs tous branchés sur la même ligne secteur par l'intermédiaire de blocs 10 respectifs.

Par rapport à l'état de la technique illustré Figure 1, l'objet de l'invention est, comme illustré Figure 2, d'éliminer le câble 18 spécifique à la transmission des données numériques entre le bloc secteur 10 et l'équipement 20 ou 26, en faisant transiter la totalité des informations nécessaires à la mise en oeuvre de la technique CPL par le seul conducteur d'alimentation basse tension 16 de l'équipement 20 ou 26.

La Figure 3 illustre sous forme de schéma par blocs fonctionnels les différents circuits du bloc secteur 10 et ceux, désignés 30, qui sont intégrés à l'équipement 20, 26 et qui sont propres à la mise en oeuvre de l'invention. Le bloc secteur 10 comprend un convertisseur AC/DC 32 à découpage permettant de transformer la tension alternative 230 V - 50 Hz du secteur en une tension continue stabilisée +12 V. Cette tension continue est appliquée au conducteur basse tension 16 d'alimentation de l'équipement distant 20, 26.

Le couplage entre le convertisseur 32 et le conducteur basse tension 16 se fait par l'intermédiaire d'un filtre passe-bas 34 constitué d'une inductance de puissance dimensionnée de manière à pouvoir supporter le courant de sortie dans le conducteur basse tension (de plusieurs ampères, typiquement de l'ordre de 4 A), faisant en sorte que l'alimentation ne présente pas une impédance faible aux hautes fréquences, ce qui atténuerait les signaux CPL.

Le bloc secteur 10 comporte également, reliés à l'entrée secteur alternative, un circuit additionnel 36 de détection du signal ZC (détection de passage par zéro) ainsi qu'un circuit de couplage CPL 38. Le circuit 36, dont on décrira le rôle et le fonctionnement plus loin, possède une sortie de contrôle du convertisseur 32, spécifique à la mise en oeuvre de l'invention. Le circuit 38 de couplage CPL est relié en sortie au conducteur basse tension 16 en aval du filtre passe-bas, de manière que la charge présente aux hautes fréquences une impédance suffisamment élevée pour ne pas atténuer les signaux CPL dans la bande 2-30 MHz.

Du côté de l'équipement 20, 26, le conducteur basse tension 16 alimente la charge 40 en +12 V continus avec un minimum d'ondulation 50 Hz résiduelle : en effet, lorsque l'équipement comprend par exemple un disque dur pour un magnétoscope numérique, une ondulation excessive empêcherait un fonctionnement correct du disque dur, de sorte qu'il est important de maîtriser parfaitement ce paramètre.

L'ensemble 30 comprend :
- un circuit 42 de modulation/démodulation CPL,
- un filtre passe-bas 44 constitué de selfs de puissance interposées entre le conducteur basse tension 16 et la charge 40 (la nature et la fonction de ce filtre 44 sont semblables à celles du filtre 34 situé dans le bloc secteur 10),
- un circuit de synchronisation 46 comprenant des moyens d'extraction du signal ZC, ainsi que
- un circuit 48 de couplage CPL (dont la structure et les fonctions sont semblables au circuit de couplage CPL 38 du bloc secteur 10).

Le circuit 42 de modulation/démodulation CPL comprend une entrée/sortie TX/RX reliée au circuit de couplage CPL 48, lui-même directement connecté au conducteur basse tension 16, ainsi qu'une entrée/sortie Ethernet reliée au circuits numériques internes de l'équipement 20, 26. Ce circuit 42 de modulation/démodulation CPL reçoit également en entrée un signal ZC à la fréquence du secteur, pour la synchronisation et le séquencement de la modulation et de la démodulation des données numériques. Ce signal ZC est extrait par le circuit 46 qui est directement relié en entrée au conducteur basse tension 16.

On va maintenant décrire en détail la structure des différents circuits correspondant aux blocs fonctionnels de la Figure 3, d'abord pour le bloc secteur 10 puis pour le circuit 30 de l'équipement 20, 26.

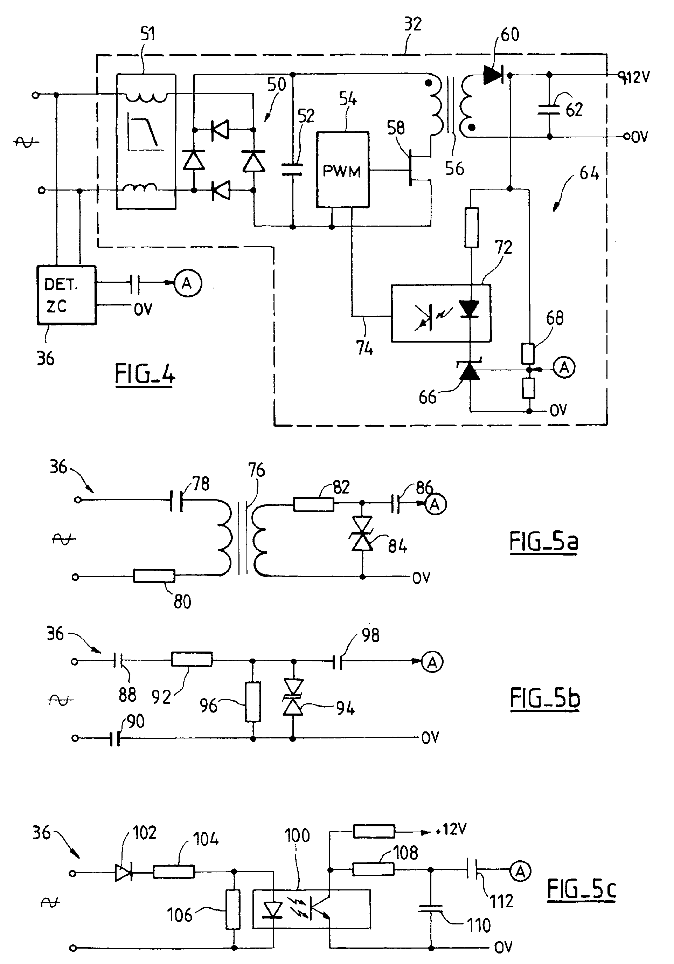

La Figure 4 illustre la structure du convertisseur AC/DC à découpage 32, qui est dans cet exemple un convertisseur en topologie *flyback,* bien que d'autres topologies puissent être aussi bien utilisées (telles que *forward, push-pull, half-bridge ou full-bridge).*

La tension alternative (230 V - 50 Hz) de la ligne secteur est tout d'abord redressée par un pont de diodes 50 précédé par un filtre passe-bas 51 (pour éviter que les hautes fréquences générées par l'alimentation ne perturbent les signaux CPL), puis filtrée par un condensateur 52. Un circuit 54 de commande à modulation de largeur d'impulsions (PWM) assure le découpage de cette tension continue, qui traverse le primaire d'un transformateur abaisseur de tension 56 et un interrupteur à l'état solide 58 commandé par le circuit de contrôle PWM 54. La tension au secondaire du transformateur est redressée par une diode 60 et filtrée par un condensateur 62, de manière à délivrer une tension continue, de +12 V dans cet exemple.

La tension continue +12 V est filtrée et régulée par une boucle de contre-réaction 64. Dans cette boucle, la tension de sortie est injectée dans un pont diviseur résistif 68, 70 pour donner une tension de consigne appliquée à un redresseur contrôlé 66 en série avec la LED d'entrée de l'optocoupleur 72, dont le phototransistor de sortie commande, via la ligne 74, le circuit PWM 54 de modulation de la largeur des impulsions de découpage. Une augmentation de la tension de sortie aura pour effet d'augmenter le courant en entrée de l'optocoupleur 72, produisant une augmentation du courant de sortie de ce même optocoupleur. Par voie de conséquence, le circuit 54 contrôlé par ce courant de sortie commutera plus ou moins l'interrupteur 58, engendrant un transfert d'énergie plus ou moins important vers le secondaire du transformateur 56, ce qui permet l'asservissement de la tension de sortie en fonction de la charge.

Il s'agit là d'un mode de contre-réaction classique d'un convertisseur *flyback.*

De façon caractéristique de l'invention, ce circuit est modifié en prévoyant un circuit additionnel 36 permettant de recueillir un signal sinusoïdal dérivé de la tension alternative de la ligne secteur. Ce signal sinusoïdal est réinjecté au noeud d'entrée A de la boucle de contre-réaction 64 (entre les résistances du pont diviseur 68, 70), en superposition avec la tension de consigne, ce qui aura pour effet de moduler la tension aux bornes de la résistance 70 et ainsi de moduler le courant dans la diode 66 et dans l'optocoupleur 72. La commande du circuit 54 va se trouver ainsi modulée au même rythme, ce qui va produire une modulation correspondante de la sortie+12 V.

Cette sortie se présentera donc sous la forme d'une tension continue +12 V à laquelle sera superposée une ondulation sinusoïdale induite par la réinjection de la tension alternative par le circuit 36.

L'amplitude de cette ondulation est choisie par un ajustement des divers composants de manière à présenter une valeur (i) suffisante pour faciliter son extraction côté équipement, mais (ii) insuffisante pour risquer de perturber les équipements alimentés par la tension continue délivrée à l'équipement. En pratique, pour une tension continue de 12 V, une amplitude crête-à-crête comprise entre 50 et 300 mV, de préférence de l'ordre de 200 mV, répond à ces critères, en particulier pour des équipements pourvus d'un disque dur, composant sensible aux ondulations résiduelles excessives.

On notera que l'ondulation résiduelle en sortie du convertisseur à découpage et la tension alternative de la ligne secteur présentent entre elles une valeur de déphasage constante, indépendante de la charge appliquée.

On verra plus loin l'importance de cette caractéristique : comme l'ondulation résiduelle sert à extraire un signal ZC de synchronisation, il sera aisé de compenser à ce stade le déphasage introduit, dans la mesure où celui-ci est constant.

Les Figures 5a à 5c illustrent diverses variantes de réalisation du circuit additionnel 36 de réinjection de la tension alternative secteur.

Dans le cas de la Figure 5a, la tension alternative secteur est convertie en un signal alternatif basse tension par l'intermédiaire d'un transformateur 76 basse fréquence (50 Hz) assurant l'isolement. Le rapport primaire/secondaire de ce transformateur est choisi pour que l'amplitude de sortie corresponde à ce qui est nécessaire pour moduler le point A de la boucle de contre-réaction 64 du convertisseur *flyback.* Côté primaire, un condensateur 78 et une résistance 80 font office de protection à la mise sous tension. Côté secondaire, une résistance 82 et une diode de suppression des transitoires 84 protègent le circuit situé en aval des surtensions pouvant traverser le transformateur 76. Un condensateur de liaison 86 assure le couplage en alternatif avec le point A de la boucle de contre-réaction, en évitant de perturber la tension continue de consigne au point milieu du diviseur de tension 68, 70.

La Figure 5b illustre une autre structure de circuit additionnel 36, où l'isolation est assurée par deux condensateurs haute tension 88, 90 de faible valeur capacitive. Une résistance 92 et une diode de suppression des transitoires 94 protègent le circuit placé en aval des surtensions pouvant traverser le circuit. Le pont diviseur constitué par les résistances 92 et 96 fait office d'abaisseur de tension, et la tension alternative résultante est appliquée au point A de la boucle de contre-réaction, via un condensateur de liaison 98.

La Figure 5c illustre encore une autre forme de réalisation du circuit 36, où l'isolement est assuré par un optocoupleur 100. En amont de l'optocoupleur, une diode 102 ne laisse passer que l'alternance positive de la sinusoïde de la tension secteur, et un pont diviseur 104, 106 abaisse la tension à une valeur compatible avec la LED de l'optocoupleur, la résistance 106 étant choisie de manière à ne pas dépasser la tension inverse maximale autorisée aux bornes de cette LED. En sortie de l'optocoupleur, la résistance 108 et le condensateur 110 permettent de récupérer un signal carré, filtré et lissé, qui est appliqué au point A de la boucle de contre-réaction via le condensateur de liaison 112.

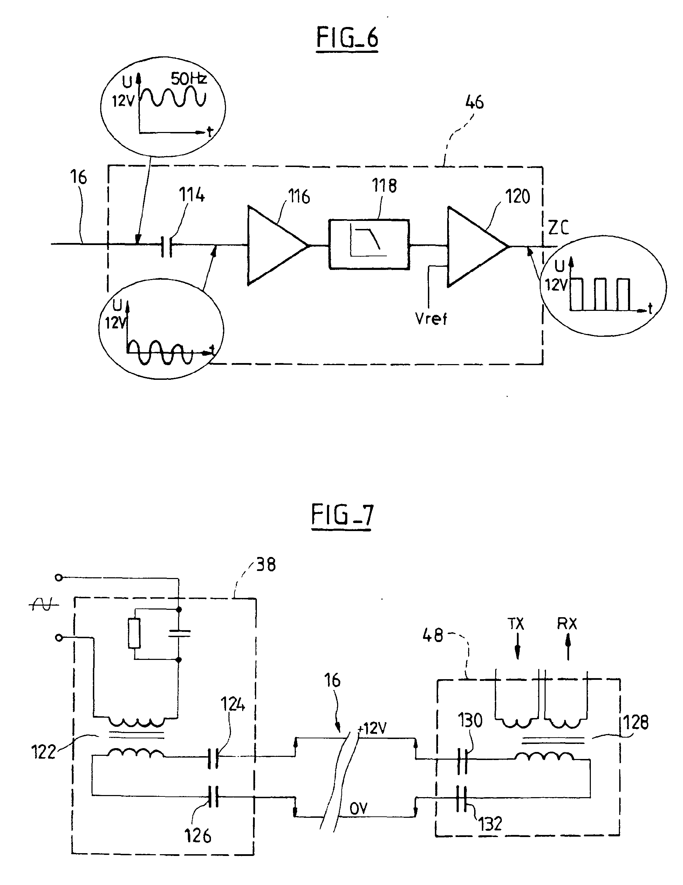

La Figure 6 illustre un exemple de réalisation du circuit de synchronisation 46 extracteur d'impulsions, situé côté équipement.

Tout d'abord, un condensateur 114 élimine la composante continue (12 V) présente sur le conducteur basse tension 16. Le signal alternatif résiduel est amplifié par l'amplificateur 116 et appliqué à un filtre passe-bas 118 puis à un comparateur (amplificateur à seuil) 120 assurant une mise en forme et délivrant en sortie le signal ZC de détection du passage par zéro. Ce signal ZC se présente sous forme d'un signal carré à la fréquence du réseau secteur, avec toutefois un déphasage constant qui sera compensé par des moyens matériels ou logiciels lors du décodage assurant la synchronisation du modulateur/démodulateur CPL.

La Figure 7 illustre les circuits 38 et 48 de couplage CPL, disposés respectivement dans le bloc secteur 10 et dans le circuit 30 de l'équipement 20,26.

Comme on l'a indiqué, le signal CPL dans la bande 2-30 MHz est véhiculé par le conducteur basse tension 16 d'alimentation de l'équipement, de façon bidirectionnelle.

Du côté du bloc secteur, le circuit 38 comprend un transformateur 122 assurant l'isolation nécessaire entre la haute tension de la ligne secteur et la basse tension du conducteur 16. Ce transformateur 122 peut être un transformateur à deux enroulements, couplé en alternatif au conducteur basse tension d'alimentation 16 par deux condensateurs de liaison 124, 126.

Du côté de l'équipement, le circuit 48 comprend un transformateur d'isolation 128 comprenant trois enroulements, couplé de la même façon en alternatif au conducteur basse tension 16 par l'intermédiaire de condensateurs de liaison 130, 132.

De façon générale, le fait de déporter les circuits de modulation/démodulation CPL dans l'équipement permet de réduire la taille du bloc secteur 10 (i) d'une part du fait de la suppression de ce circuit CPL, et (ii) d'autre part et surtout, du fait de la réduction des contraintes thermiques.

En effet, le circuit CPL ne subit plus l'échauffement du convertisseur du bloc secteur. Comme en outre il est placé dans l'équipement, il y dispose d'un plus grand volume pour dissiper la chaleur qu'il produit, de sorte qu'il est beaucoup plus facile d'assurer le bon refroidissement des circuits numériques correspondants, en augmentant ainsi leur fiabilité et leur durée de vie.

Par ailleurs, on notera que la présente invention que l'on vient de décrire ne s'applique pas uniquement à la transmission de l'information de détection de passage par zéro (signal ZC) nécessaire à la mise en oeuvre de l'application CPL.

Elle peut également s'appliquer à la transmission à faible débit de données entre le bloc secteur 10 et l'équipement 20 ou 26, via le conducteur basse tension 16 d'alimentation de cet équipement.

Il est ainsi possible de transmettre à l'équipement des informations relatives au bloc secteur, notamment à la mise en service de celui-ci.

Le bloc secteur peut être en particulier pourvu à cet effet d'un bouton-poussoir 134 (Figure 1) permettant le déclenchement d'une modulation "tout ou rien" pendant des périodes où le CPL n'est pas utilisé.

Cette modulation "tout ou rien" est une modulation OOK *(On-Off Keying),* "tout" signifiant que le signal alternatif est réinjecté dans la boucle de contre-réaction du convertisseur *flyback* 32 par le circuit 36, et "rien" signifiant que cette réinjection est interrompue. Elle permet par exemple de transmettre à l'équipement des informations contenues dans une mémoire 136 du bloc secteur (telles que numéro de série, version, etc.) via le conducteur d'alimentation 16, ou encore des signaux de supervision du bloc secteur tels que : alarme de température, surtension détectée, dysfonctionnements divers, etc.

Cette transmission d'informations à bas débit entre le bloc secteur et l'équipement est opérée pendant les "périodes de silence" des données CPL, c'est-à-dire les périodes où aucune de ces données numériques n'est transmise sur le conducteur 16.

On pourra en particulier utiliser cette fonction à la mise sous tension, par exemple en appuyant sur le bouton 134 pour l'association des boîtiers CPL ou la lecture de la mémoire 136.

Dans tous les cas, l'utilisation de la transmission de données à bas débit via la modulation 50 Hz sur le câble 12 V stoppera temporairement le signal ZC, ce qui n'est pas critique en soi puisqu'il n'y a pas de données CPL à moduler ou démoduler durant cette phase.

## Revendications

1. Un ensemble mettant en oeuvre une technique de transmission de données par courants porteurs en ligne CPL véhiculés sur une ligne secteur, comprenant :
- un équipement (20, 26) apte à traiter des données numériques CPL reçues ou émises sur ladite ligne secteur ;
- un bloc secteur (10) distinct de l'équipement, comportant un convertisseur à découpage (32) apte à générer une tension continue d'alimentation à partir de la tension de la ligne secteur ; et
- un conducteur d'alimentation basse tension (16) reliant le bloc secteur à l'équipement, pour délivrer à ce dernier la tension continue d'alimentation générée par le bloc secteur distant,
ledit ensemble comportant :
- un circuit de modulation/démodulation de courants CPL véhiculés par la ligne secteur ; et
- un circuit de synchronisation, produisant un signal à la fréquence du secteur appliqué en entrée du circuit de modulation/démodulation,
ledit ensemble étant essentiellement dépourvu de liaison spécifique de transmission de données numériques entre le bloc secteur et l'équipement, ces données numériques étant transmises par l'intermédiaire du conducteur d'alimentation basse tension (16) ;
le circuit de modulation/démodulation CPL (42) et le circuit de synchronisation (46) étant disposés dans l'équipement (20, 26), et
le bloc secteur (10) comprenant un circuit de couplage CPL (38) entre la ligne secteur et le conducteur basse tension, et l'équipement (20, 26) comprenant un circuit de couplage CPL (48) entre le conducteur basse tension et le circuit de modulation/démodulation CPL,
ledit ensemble étant **caractérisé en ce que** :
- le convertisseur comprend une boucle de contre-réaction (64) dans laquelle une fraction de ladite tension continue est appliquée en tant que tension de consigne à une entrée d'un circuit de commande du découpage ;
- il est prévu dans le bloc secteur (10) un circuit additionnel (36), couplé en entrée à la ligne secteur et en sortie à la boucle de contre-réaction du convertisseur, pour réinjecter en superposition à la tension de consigne un signal dérivé de la tension alternative de la ligne secteur ; et
- le circuit de synchronisation dans l'équipement comprend un circuit (46) extracteur d'impulsions à la fréquence du secteur, couplé en entrée au conducteur basse tension.

2. L'ensemble de la revendication 1, dans lequel le circuit additionnel (36) est un circuit de couplage via un transformateur (76) interposé entre la ligne secteur et un noeud d'entrée de la boucle de contre-réaction du convertisseur à découpage.

3. L'ensemble de la revendication 1, dans lequel le circuit additionnel (36) est un circuit de couplage via des condensateurs (88, 90) interposés entre la ligne secteur et un noeud d'entrée de la boucle de contre-réaction du convertisseur à découpage.

4. L'ensemble de la revendication 1, dans lequel le circuit additionnel (36) est un circuit de couplage via un optocoupleur (100) interposé entre la ligne secteur et un noeud d'entrée de la boucle de contre-réaction du convertisseur à découpage.

5. L'ensemble de la revendication 1, dans lequel il est prévu dans le bloc secteur (10) un filtre passe-bas (34) entre la sortie du convertisseur à découpage et le conducteur basse tension, et il est prévu dans l'équipement (20, 26) un filtre passe-bas (44) entre le conducteur basse tension et les circuits de l'équipement à alimenter par la tension continue générée par le convertisseur à découpage.

6. L'ensemble de la revendication 1, dans lequel le circuit extracteur d'impulsions (46) comprend un filtre passe-bas (118) couplé en entrée au conducteur basse tension, et dont la sortie est appliquée à l'entrée d'un comparateur à seuil (120) délivrant en sortie un signal impulsionnel (ZC) à la fréquence du secteur, appliqué en entrée du circuit de modulation/démodulation CPL (42).

7. L'ensemble de la revendication 1, dans lequel le circuit de synchronisation comprend en outre des moyens matériels ou logiciels de compensation du déphasage du signal à la fréquence du secteur délivré par le circuit extracteur d'impulsions (46), par rapport à la tension alternative de la ligne secteur.

8. L'ensemble de la revendication 1, dans lequel le convertisseur à découpage (32) est un convertisseur de topologie *flyback*, *forward*, *push-pull, half-bridge ou full-bridge.*

9. L'ensemble de la revendication 1, dans lequel la tension alternative réinjectée par le circuit additionnel en superposition à la tension de consigne présente un amplitude crête à crête comprise entre 50 et 300 mV, de préférence de 200 mV, pour une tension continue de 12 V.

10. L'ensemble de la revendication 1, comprenant en outre des moyens de transmission d'informations à bas débit sur la ligne basse tension, dans lesquels :
- le bloc secteur (10) comprend un circuit pour moduler en tout-ou-rien ledit signal à la fréquence du secteur, en fonction des informations à transmettre ; et
- l'équipement (20, 26) comprend des moyens de décodage, pour extraire lesdites informations à transmettre à partir du signal délivré en sortie par le circuit extracteur d'impulsions couplé en entrée au conducteur basse tension.

11. L'ensemble de la revendication 10, dans lequel le bloc secteur (10) comprend en outre un bouton-poussoir (134) d'activation dudit circuit de modulation en tout-ou-rien, pour initier la transmission desdites informations, contenues dans une mémoire (136) du bloc secteur.

12. Un bloc secteur (10) adapté à un ensemble selon l'une des revendications 1 à 11, comprenant :
- un convertisseur à découpage (32) apte à générer une tension continue d'alimentation à partir de la tension de la ligne secteur, ce convertisseur comprenant une boucle de contre-réaction (64) dans laquelle une fraction de ladite tension continue est appliquée en tant que tension de consigne à une entrée d'un circuit de commande du découpage ;
- un circuit de couplage CPL (38) entre la ligne secteur et le conducteur d'alimentation basse tension ; et
- un circuit additionnel (36), couplé en entrée à la ligne secteur et en sortie à la boucle de contre-réaction du convertisseur, pour réinjecter en superposition à la tension de consigne un signal dérivé de la tension alternative de la ligne secteur.

13. Un équipement (20, 26) adapté à un ensemble selon l'une des revendications 1 à 11, comprenant :
- un circuit (42) de modulation/démodulation de courants CPL véhiculés par la ligne secteur ;
- un circuit de couplage CPL (48) entre le conducteur d'alimentation basse tension et le circuit de modulation/démodulation CPL ; et
- un circuit de synchronisation, comprenant un circuit extracteur d'impulsions (46) à la fréquence du secteur, couplé en entrée au conducteur basse tension et produisant en sortie un signal à la fréquence du secteur appliqué en entrée du circuit de modulation/démodulation.

## Claims

1. Assembly implementing a technique for data transmission by power line communication PLC, conveyed over a mains line, comprising:
- an apparatus (20, 26) suitable for processing PLC digital data received or transmitted over said mains line;
- a mains block (10) separate from the apparatus, comprising a switched-mode converter (32) suitable for generating a DC power supply voltage from the mains line voltage; and
- a low voltage power supply conductor (16) linking the mains block to the apparatus, for delivering to the latter the DC power supply voltage generated by the remote mains block,
said assembly comprising:
- a circuit for modulating/demodulating PLC currents conveyed by the mains line; and
- a synchronization circuit, producing a signal at the frequency of the mains applied as input to the modulation/demodulation circuit,
said assembly essentially having no specific digital data transmission link between the mains block and the apparatus, these digital data being transmitted via the low voltage power supply conductor (16);
the PLC modulation/demodulation circuit (42) and the synchronization circuit (46) being arranged in the apparatus (20, 26), and
the mains block (10) comprising a PLC coupling circuit (38) between the mains line and the low voltage conductor, and the apparatus (20, 26) comprising a PLC coupling circuit (48) between the low voltage conductor and the PLC modulation/demodulation circuit,
said assembly being **characterized in that**:
- the converter comprises a feedback loop (64) in which a fraction of said DC voltage is applied as setpoint voltage to an input of a switching control circuit;
- there is provided, in the mains block (10), an additional circuit (36), coupled as input to the mains line and as output to the feedback loop of the converter, to reinject, by superposition on the setpoint voltage, a signal derived from the AC voltage of the mains line;
and
- the synchronization circuit in the apparatus comprises a circuit (46) for extracting pulses at the frequency of the mains, coupled as input to the low voltage conductor.

2. Assembly according to Claim 1, in which the additional circuit (36) is a coupling circuit via a transformer (76) interposed between the mains line and an input node of the feedback loop of the switch-mode converter.

3. Assembly according to Claim 1, in which the additional circuit (36) is a coupling circuit via capacitors (88, 90) interposed between the mains line and an input node of the feedback loop of the switched-mode converter.

4. Assembly according to Claim 1, in which the additional circuit (36) is a coupling circuit via an optocoupler (100) interposed between the mains line and an input node of the feedback loop of the switched-mode converter.

5. Assembly according to Claim 1, in which there is provided, in the mains block (10), a low-pass filter (34) between the output of the switched-mode converter and the low voltage conductor, and there is provided, in the apparatus (20, 26), a low-pass filter (44) between the low voltage conductor and the circuits of the apparatus to be powered by the DC voltage generated by the switched-mode converter.

6. Assembly according to Claim 1, in which the pulse extracting circuit (46) comprises a low-pass filter (118) coupled as input to the low voltage conductor, and the output of which is applied to the input of a threshold comparator (120) delivering as output a pulsed signal (ZC) at the frequency of the mains, applied as input to the PLC modulation/demodulation circuit (42).

7. Assembly according to Claim 1, in which the synchronization circuit also comprises hardware or software means for compensating the phase shift of the signal at the frequency of the mains delivered by the pulse extracting circuit (46), relative to the AC voltage of the mains line.

8. Assembly according to Claim 1, in which the switched-mode converter (32) is a converter of flyback, forward, push-pull, half-bridge or full-bridge topology.

9. Assembly according to Claim 1, in which the AC voltage reinjected by the additional circuit by superposition on the setpoint voltage has a peak-to-peak amplitude of between 50 and 300 mV, preferably 200 mV, for a DC voltage of 12 V.

10. Assembly according to Claim 1, also comprising means for transmitting information at low bit rate over the low voltage line, in which:
- the mains block (10) comprises a circuit for digitally modulating said signal at the frequency of the mains, according to the information to be transmitted; and
- the apparatus (20, 26) comprises decoding means, for extracting said information to be transmitted from the signal delivered as output by the pulse extracting circuit coupled as input to the low voltage conductor.

11. Assembly according to Claim 10, in which the mains block (10) also comprises a push button (134) for activating said digital modulation circuit, for initiating the transmission of said information, contained in a memory (136) of the mains block.

12. Mains block (10) suitable for an assembly according to one of Claims 1 to 11, comprising:
- a switched-mode converter (32) suitable for generating a DC power supply voltage from the voltage of the mains line, this converter comprising a feedback loop (64) in which a fraction of said DC voltage is applied as setpoint voltage to an input of a switching control circuit;
- a PLC coupling circuit (38) between the mains line and the low voltage power supply conductor; and
- an additional circuit (36), coupled as input to the mains line and as output to the feedback loop of the converter, for reinjecting, by superposition on the setpoint voltage, a signal derived from the AC voltage of the mains line.

13. Apparatus (20, 26) suitable for an assembly according to one of Claims 1 to 11, comprising:
- a circuit (42) for modulating/demodulating PLC currents conveyed by the mains line;
- a PLC coupling circuit (48) between the low voltage power supply conductor and the PLC modulation/demodulation circuit; and
- a synchronization circuit, comprising a pulse extracting circuit (46) at the frequency of the mains, coupled as input to the low voltage conductor and producing as output a signal at the frequency of the mains applied as input to the modulation/demodulation circuit.

## Patentansprüche

1. Einheit, die eine Stromnetzkommunikation(PLC)-Übertragungstechnik von Daten anwendet, die auf einer Netzleitung transportiert werden, die Folgendes enthält:
- eine Ausrüstung (20, 26), die digitale PLC-Daten verarbeiten kann, die auf der Netzleitung empfangen oder gesendet werden;
- ein von der Ausrüstung getrenntes Netzanschlussgerät (10), das einen getakteten Wandler (32) aufweist, der eine Speisegleichspannung ausgehend von der Spannung der Netzleitung erzeugen kann; und
- einen Niederspannungsspeiseleiter (16), der das Netzanschlussgerät mit der Ausrüstung verbindet, um an diese die vom fernen Netzanschlussgerät erzeugte Speisegleichspannung zu liefern,
wobei die Einheit Folgendes aufweist:
- einen Modulations-/Demodulationsschaltkreis von PLC-Strömen, die von der Netzleitung übertragen werden; und
- einen Synchronisationsschaltkreis, der ein Signal auf der Netzfrequenz erzeugt, das an den Eingang des Modulations/Demodulationsschaltkreises angelegt wird,
wobei die Einheit im Wesentlichen keine spezifische Verbindung zur Übertragung digitaler Daten zwischen dem Netzanschlussgerät und der Ausrüstung aufweist, wobei diese digitalen Daten mit Hilfe des Niederspannungs-Speiseleiters (16) übertragen werden;
wobei der PLC-Modulations-/Demodulationsschaltkreis (42) und der Synchronisationsschaltkreis (46) in der Ausrüstung (20, 26) angeordnet sind, und
wobei das Netzanschlussgerät (10) einen PLC-Schaltkreis (38) zwischen der Netzleitung und dem Niederspannungsleiter enthält, und die Ausrüstung (20, 26) einen PLC-Kopplungsschaltkreis (48) zwischen dem Niederspannungsleiter und dem PLC-Modulations-/Demodulationsschaltkreis enthält, wobei die Einheit **dadurch gekennzeichnet ist, dass**:
- der Wandler eine Rückkopplungsschleife (64) enthält, in der ein Teil der Gleichspannung als Sollspannung an einen Eingang eines Steuerschaltkreises der Taktung angelegt wird;
- im Netzanschlussgerät (10) ein zusätzlicher Schaltkreis (36) vorgesehen ist, der am Eingang mit der Netzleitung und am Ausgang mit der Rückkopplungsschleife des Wandlers gekoppelt ist, um in Überlagerung der Sollspannung ein abgeleitetes Signal der Wechselspannung der Netzleitung wieder einzuspeisen; und
- der Synchronisationsschaltkreis in der Ausrüstung einen Impulsentnahmeschaltkreis (46) auf der Netzfrequenz enthält, der am Eingang mit dem Niederspannungsleiter gekoppelt ist.

2. Einheit nach Anspruch 1, bei der der zusätzliche Schaltkreis (36) ein Kopplungsschaltkreis über einen Transformator (76) ist, der zwischen die Netzleitung und einen Eingangsknoten der Rückkopplungsschleife des getakteten Wandlers eingefügt ist.

3. Einheit nach Anspruch 1, bei der der zusätzliche Schaltkreis (36) ein Kopplungsschaltkreis über Kondensatoren (88, 90) ist, der zwischen die Netzleitung und einen Eingangsknoten der Rückkopplungsschleife des getakteten Wandlers eingefügt ist.

4. Einheit nach Anspruch 1, bei der der zusätzliche Schaltkreis (36) ein Kopplungsschaltkreis über einen optischen Koppler (100) ist, der zwischen die Netzleitung und einen Eingangsknoten der Rückkopplungsschleife des getakteten Wandlers eingefügt ist.

5. Einheit nach Anspruch 1, bei der im Netzanschlussgerät (10) ein Tiefpassfilter (34) zwischen dem Ausgang des getakteten Wandlers und dem Niederspannungsleiter vorgesehen ist, und in der Ausrüstung (20, 26) ein Tiefpassfilter (44) zwischen dem Niederspannungsleiter und den Schaltkreisen der Ausrüstung vorgesehen ist, die mit der vom getakteten Wandler erzeugten Gleichspannung gespeist werden sollen.

6. Einheit nach Anspruch 1, bei der der Impulsentnahmeschaltkreis (46) ein Tiefpassfilter (118) enthält, das am Eingang an den Niederspannungsleiter gekoppelt ist, und dessen Ausgang an den Eingang eines Schwellenkomparators (120) angelegt wird, der am Ausgang ein Impulssignal (ZC) auf der Netzfrequenz liefert, das an den Eingang des PLC-Modulations/Demodulationsschaltkreises (42) angelegt wird.

7. Einheit nach Anspruch 1, bei der der Synchronisationsschaltkreis außerdem Hardwareoder Softwareeinrichtungen zur Kompensation der Phasenverschiebung des Signals auf der Netzfrequenz, das von dem Impulsentnahmeschaltkreis (46) geliefert wird, bezüglich der Wechselspannung der Netzleitung enthält.

8. Einheit nach Anspruch 1, bei der der getaktete Wandler (32) ein Wandler mit einer Topologie flyback, forward, push-pull, half-bridge oder full-bridge ist.

9. Einheit nach Anspruch 1, bei der die von dem zusätzlichen Schaltkreis in Überlagerung der Sollspannung wieder eingespeiste Wechselspannung eine Spitze-Spitze-Amplitude zwischen 50 und 300 mV, vorzugsweise von 200 mV, für eine Gleichspannung von 12 V aufweist.

10. Einheit nach Anspruch 1, die außerdem Einrichtungen zur Übertragung von Informationen mit niedriger Übertragungsrate auf der Niederspannungsleitung enthält, bei denen:
- das Netzanschlussgerät (10) einen Schaltkreis enthält, um eine Ein/Aus-Modulation des Signals auf der Netzfrequenz abhängig von den zu übertragenden Informationen durchzuführen; und
- die Ausrüstung (20, 26) Decodiereinrichtungen enthält, um die zu übertragenden Informationen ausgehend von dem am Ausgang vom Impulsentnahmeschaltkreis gelieferten Signal zu entnehmen, der am Eingang mit dem Niederspannungsleiter gekoppelt ist.

11. Einheit nach Anspruch 10, bei der das Netzanschlussgerät (10) außerdem einen Drücker (134) zur Aktivierung des Ein/Aus-Modulationsschaltkreises enthält, um die Übertragung der Informationen zu initiieren, die in einem Speicher (136) des Netzanschlussgeräts enthalten sind.

12. Netzanschlussgerät (10), das an eine Einheit nach einem der Ansprüche 1 bis 11 angepasst ist, das Folgendes enthält:
- einen getakteten Wandler (32), der eine Speisegleichspannung ausgehend von der Spannung der Netzleitung erzeugen kann, wobei dieser Wandler eine Rückkopplungsschleife (64) enthält, in der ein Teil der Gleichspannung als Sollspannung an einen Eingang eines Steuerschaltkreises der Taktung angelegt wird;
- einen PLC-Schaltkreis (38) zwischen der Netzleitung und dem Niederspannungsspeiseleiter, und
- einen zusätzlichen Schaltkreis (36), der am Eingang an die Netzleitung und am Ausgang an die Rückkopplungsschleife des Wandlers gekoppelt ist, um in Überlagerung der Sollspannung ein von der Wechselspannung der Netzleitung abgeleitetes Signal wieder einzuspeisen.

13. Ausrüstung (20, 26), die an eine Einheit nach einem der Ansprüche 1 bis 11 angepasst ist und Folgendes enthält:
- einen Schaltkreis (42) zur Modulation/Demodulation von PLC-Strömen, die von der Netzleitung transportiert werden;
- einen PLC-Kopplungsschaltkreis (48) zwischen dem Niederspannungsspeiseleiter und dem PLC-Modulations-/Demodulationsschaltkreis; und
- einen Synchronisationsschaltkreis, der einen Impulsentnahmeschaltkreis (46) auf der Netzfrequenz enthält, der am Eingang mit dem Niederspannungsleiter gekoppelt ist und am Ausgang ein Signal auf der Netzfrequenz erzeugt, das an den Eingang des Modulations/Demodulationsschaltkreises angelegt wird.
